# EUROPEAN PATENT APPLICATION

(11) **EP 1 550 371 A2**
(43) Date of publication of application: **06.07.2005**
(21) Application number: 04474003.3
(22) Date of filing: 28.12.2004
(51) Int. Cl.: A01N 43/653

(54) **Pesticidal compositions comprising an oxathiin and triazole fungicides**

(30) Priority: 31.12.2003 UA 3121320
(71) Applicant: Tovarystvo z obmegenoyu vidpovidalnistyu "Prezence", Kiev, 02160 (UA)
(72) Inventor: Kulykov, Sergiy Viktorovych, Kyiv, 20191 (UA)
(74) Representative: Bacik, Kvetoslav

(57) **Abstract**

The invention has its ground in the pesticidal composition comprising as active components effective substance of oxathiin series carboxin, other active components, and water for creation of a suspension. Novelty of the present solution lies in its comprising as other active components effective substances of triazole series triadimenol and tebuconazol, the mass ratio of effective substances carboxin, triadimenol and tebuconazol amounting to (1...6):(0,7...4):(0,01...0,6), correspondingly, said composition further comprising auxiliary substances at following quantitative ratio of components, g/l:

| | |
|---|---|
| carboxin | 100...600 |
| triadimenol | 70...400 |
| tebuconazol | 1...60 |
| auxiliary compounds | 50...300 |
| water | to 1 l. |

## Description

The invention relates to the field of manufacture of pesticidal preparations for their practical 6 application, namely, to pesticidal compositions for pre-sowing seed dressing of cereals and other cultures, based on combination of active compounds belonging to oxathiin series and triazole series.

In manufacturing practice of pesticidal preparations, there is known a compound of oxathiin series carboxin [1, 2]. This is the only compound used to fight loose smut. However, it has no effect on relatively wide range of diseases and hazardous microorganisms.

There is known a pesticidal composition comprising as active substance an effective agent of oxathiin series carboxin [3]. Such composition has more extended spectrum of action, though still not sufficient one.

There is known also a pesticidal composition comprising as active component an effective substance of oxathiin series carboxin and water [4]. This preparation provides the plant germs with mobile forms of zinc, although its spectrum of action is still not wide enough.

The most close to the solution proposed is composition comprising as active components effective agent of oxathiin series carboxin, fungicide thiram, and water for creating a suspension [5]. Such preparation (tradename Vitavax 200 FF) has rather wide demand, but its spectrun of action is insufficiently wide due to utilization, beside carboxin, of thiram only, and the standard rate of application for this preparation is rather high.

The invention has its ground in the problem of providing pesticidal composition which would allow, due to novel composition of components and their mass ratio, to broaden spectrum of action for the ready preparation in relation to the cultures treated, hazardous microorganisms, to increase its efficiency and, correspondingly, to decrease rates of application by 2.5-3 times, and besides, to increase crop by up to 10 15%, as well as to extend the range of pesticides.

The problem posed is solved by pesticidal composition comprising as active components effective substance of oxathiin series carboxin, other active components, and water for creation of a suspension. Novelty of the present solution lies in its comprising as other active components effective substances of triazole series triadimenol and tebuconazol, the mass ratio of effective substances carboxin, triadimenol and tebuconazol amounting to (1...6):(0,7...4):(0,01...0,6), correspondingly, said composition further comprising auxiliary substances at following quantitative ratio of components, g/l:

| | |
|---|---|
| carboxin | 100...600 |
| triadimenol | 70...400 |
| tebuconazol | 1...600 |
| auxiliary campounds | 50...300 |
| water | to 1 1 |

Separate case of embodiment of the invention may be exemplified by composition comprising as auxiliary substances dispersing agent, antiseptic, antifoaming agent, antifreeze, stabilizer, and dye, at following quantitative ratio of all components, g/l:

| | |
|---|---|
| Carboxin | 100..600 |
| Triadimenol | 70...400 |
| Tebuconazol | 1...60 |
| Dispersing agent | 50...200 |
| Antiseptic | up to 15 |
| Antifoaming agent | 0,01...5 |
| Antifreeze | 5...50 |
| Stabilizer | 0.5...5 |
| Dye | 3...30 |
| Water | to 1 1 |

The present composition may comprise as dispersing agent sodium 2-acrylamido-2-methylpropane sulphonic acid or 2-acrylamido-2-methylpropane sulphonic acid, or acrylic acid / acrylic acid ester copolymer, or acrylic acid / 2-acrylamido-2-methylpropane sulphonic acid copolymer, or maleic anhydride / acrylic acid copolymer. As antiseptic, pesticidal composition may comprise mecetronium or benzalkonium chloride, or dodecylbispropilenetriamine, or dodecyldimethylammonium chloride, or 1,6-dihydroxy-2,5-dioxohexane, or thiophene, or vasin.

The present pesticidal composition may comprise as antifoaming agent an organosilicon oligomer, for example, disiloxane or mixture of polymethylsiloxanes and polyvinyl alcohol, or mixture of acetylated monoglycerides and potassium succinylated monoglycerides, or fatty acids esters of polyglycerol.

The present pesticidal composition may comprise as antifreeze ethyleneglycol or polyethyleneglycol, or oxyethylated monoalkylphenol.

The present pesticidal composition may comprise as stabilizer polyvinyl alcohol or glycidyl ether-blocked acetylenediol ethoxylate.

The present pesticidal composition may comprise as dye rhodamine group dyes.

Total features of the pesticidal composition claimed, namely, it comprising as active components effective substance of oxathiin series carboxin, effective substances of triazole series triadimenol and tebuconazol, and auxiliary substances and water, in the quantitative ratio of the components claimed, allow to broaden the spectrum of action of the finished preparation in plant cultures against hazardous microorganisms, to increase their efficiency and, correspondingly, to diminish rates of application, and besides, to increase crops up to 10-15%, as well as to extend the pesticide range. Novel qualitative and quantitative composition of the preparation claimed allows, besides broadening its spectrum of action, also to diminish its rate of application by 2.5-3 times.

The preparation obtained had been tested and demonstrated efficiency in relation to rather wide range of crops: winter wheat, spring wheat, winter barley, spring barley, winter rye, spring rye, winter triticale, spring triticale, oats, rice, perennial forage grasses, corn, spring rape, winter rape, fiber flax, coriander, pea, millet, clover, vetch, tomatoes, cabbage (mother plants), carrot (mother plants), seeds of flower cultures, planting stock (bulbs, tubers, etc.) of flower cultures, and soy. Hazardous organisms (diseases) effectively controlled with the composition claimed include covered smut, loose smut, snow mold, *Helminthosporium* root rot, powdery mildew, brown rust, *Septoria* leaf blotch, barley net blotch, and barley and wheat spot blotch.

Due to the use in the present pesticidal composition of carboxin, triadimenol and tebuconazol in quantitative ratio (1...6):(0.7...4):(0.01...0.6), functional properties of these active compounds are combined and mutually increased, and synergistic effect for active components takes place, so that preparations on base of the present composition possess protective and therapeutic properties as system fungicides having broad range of action. Use of dispersing agent, antiseptic, antifoaming agent, antifreeze, and stabilizer as auxiliaries in the present pesticidal composition allows to obtain stable preparation with target pesticidal properties manifesting themselves to the utmost.

Use of sodium 2-acrylamido-2-methylpropane sulphonate, or 2-acrylamido-2-methylpropane sulphonic acid, or acrylic acid / acrylic acid ester copolymer, or acrylic acid / 2-acrylamido-2-methylpropane sulphonic acid copolymer, or maleic anhydride / acrylic acid copolymer, as a dispersing agent allows to obtain uniformly dispersed suspension.

Use of antiseptic mecetronium or benzalkonium chloride, or dodecylbispropylenetriamine, or didecyldimethylammonium chloride, or 1.6-dihydroxy-2.5-dioxohexane, or thiophene, or vasin enhances the antiseptic properties of the composition.

Use of organosilicon oligomer, for example, disiloxane, as antifoaming agent according to claims allows to prevent foam formation.

Use of ethyleneglycol or polyethyleneglycol, or oxyethylated monoalkylphenol (neonol) as antifreeze allows to utilize and store the pesticidal composition at low temperatures.

In said composition, stabilizer in the form of polyvinyl alcohol or glycidyl ether-blocked acetylenediol ethoxylate efficiently stabilizes the suspension as such. Color identification of finished preparation is ensured, as a rule, with rhodamine group dyes.

Limiting quantitative ranges for each component contents in the present composition are determined according to the technical result achieved at its application. Precisely in these content ranges for each component the functional properties of active compounds used are optimally combined, mutually enhanced, and manifest themselves.

The preparation claimed meets all the requirements to plant protection, namely, agroecological adaptability, integrability, broad spectrum of action, and efficiency.

Thus, the present solution meets criteria "novelty", "inventive level". Practical realization of the present solution is chracterized by following examples, which illustrate the present composition without limiting its scope.

Example 1. In accordance with the solution claimed a composition is formulated, which comprises constituent components in following quantitative ratio, g/l:

| | |
|---|---|
| Carboxin | 405.5 |
| Triadimenol | 98.0 |
| Tebuconazol | 3.0 |
| Dispersing agent - sodium 2-acrylamido-2-methylpropane sulphonic acid | 100.0 |
| Antiseptic - mecetronium | 3.0 |
| Antifoaming agent - disiloxane (R₃SiOSiR₃) | 2.5 |
| Antifreeze - ethyleneglycol | 20.0 |
| Stabilizer - polyvinyl alcohol | 3.0 |
| Rhodamine dye | 20.0 |
| Water | to 1 l. |

Pesticidal composition is prepared as follows:
Exactly measured volume of water, amounting to difference between 1 1 and the volume occupied by the latter components of pesticidal composition, at 15-23 °C is poured into enameled vessel. Then effective substances are added to water in following amounts: 405.5 g of carboxin, 98.0 g of triadimenol, and 3.0 g tebuconazol, followed with thoroughly mixing for 10 minutes until forming a suspension. After that, to the suspension of effective substances obtained are added 100 g of dispersing agent (sodium 2-acrylamido-2-methylpropane sulphonic acid), 3.0 g of antiseptic mecetronium, 2.5 g of antifoaming agent - organosilicon oligomer (disiloxane), 20.0 g of antifreeze ethyleneglycol, 3.0 g of stabilizer (polyvinyl alcohol), and 20.0 g of rhodamine group dye, and the total is mixed for 15 minutes. The quantity of each named component in the present pesticidal composition in order to produce so much of the preparation is estimated in working conditions on base of the above mass content in unit volume. The mixture of components obtained is subjected to treatment in the mill, whereto it is supplied at feed rate of 2-6 l/min. After the first mill, suspension obtained is fed to the second mill at the above rate. If the suspension obtained doesn't meet the specification as to degree of dispersion, it is subjected to milling once again. The suspension concentrate obtained, which is homogeneous, with elements of each component uniformly distributed throughout its volume, is allowed to stand for 24 hours. Finished preparation is fed to packaging line, where it is filled into plastic canisters.

### Characteristics of effective substances:

**Carboxin,** 5,6-dihydro-2-methyl-1,4-oxathiin-3-carboxanyl, belongs to oxathiin group. It comprises two cristalline structures having melting points of 91.5-92.5 and 98-100 °C, which in solution turn identical. Solubility at 25 °C amounts to 0.017% in water, 21% in ethyl alcohol, 15% in gasoline, 21% in methyl alcohol, 60% in acetone, and 150% in dimethylsulfoxide. Commercial product contains 97% of active substance (a.s.). Decomposes under the action of strong acids and alkali.

Low-toxic substance, with oral LD₅₀ 3.8 g/kg in rats, skin-resorptive above 8 g/kg in rabbits. Residual quantity is determined after hydrolysis by the aniline released, using colorimetry or GLC with nitrogen-selective detector. The product is analized by HPLC or IR-spectroscopy. Maximum permissible concentration (MPC) in water basins of sanitary-domestic use is 1.0 mg/l. Systemic fungicide for seed treatment against loose and covered smut. On germination of seeds, it penetrates inwards and suppress the infection inside. Migrates acropetally, protects shoots against infection with some soil pathogens. Both dimorphic varieties possess equal biological activity. Affects respiration processes, for example, by suppressing succinate oxidation to fumarate in Krebs cycle. Inhibits mitochondrial complex II.
**Triadimenol:** 1-(4-chlorophenoxy-3,3-dimethyl-1-(1H-1,2,4-triazol-1-il)-butanol-2. Belongs to triazole group. Colorless crystals, m.p. 121-127 °C. Poorly soluble in water (0.0095 %), solubility in propyl alcohol and dichloromethane 10-20%, in toluene - 2-5%. Stable in acid and basic media. Exists as two stereoisomers: triadimenol I (more active) and II. Medium- or low-toxic, oral LD₅₀ 700-1500 mg/kg in rats, 1300 mg/kg in mice, 10 g/kg in quails, skin-resorbtive above 5 g/kg in rats. Residual quantity is determined by GLC (gas-liquid chromatography). Systemic fungicide for seeds treatment against loose and covered smut. Quickly penetrates into plants. Protective systemic action against powdery mildew and rust amounted in experiments to 4-8 days. Suppress powdery mildew agents of different biological and ecological origin. Activity diminished in cool and moist weather. On treatment of spring wheat and barley seeds, 10 to 25% of the product penetrates into plants, and 46-47% is adsorbed by soil. Exhibits certain growth-regulating action, in particular, on grain seeds treatment (250 g of a.s./ton) inhibits the appearance of first leaf and disturbs its geotropism. Inhibits biosynthesis of ergosterol, hindering dimethylation in position 14 of lanosterin or 24 of methylenedihydrolanosterin, which are intermediate products of sterin synthesis in fungi. Besides, seed treatment with triadimenol protects cereals against rust (at early manifestations), triticale against black leaf blotch, and barley against *Rhynchosporium* leaf blotch and *Typhula* snow mold. May be used for spraying of vegetating plants against powdery mildew and other diseases of vegetables, sugar beet, tobacco, hop, as well as against streak and *Rhynchosporium* blotch of barley, at 1,5-2 l/ha.
**Tebuconazol,** RS-1-(4-chlorophenyl)-4,4-dimethyl-3-(1H-1,2,4-triazol-1-ilmethyl) pentan-3-ol. Belongs to triazole group. Colorless crystals, m.p. 104,7 °C, solubility in water 0.032%, readily soluble in organic solvents. Non-hydrolyzable in pH range from 4 to 9. Half-life period at 20 °C over one year. Low-toxic, oral LD₅₀ 3.9-5 g/kg in rats, 1.6-3.9 in mice, skin-resorbtive toxicity above 5 g/kg in rats. Fungicide of protective and therapeutical systemic action. Suppress biosynthesis of ergosterol in cell membranes of phytopathogens, inhibiting dimethylation in position C-14. A-sterols produced also affect metabolism, tebuconazol being different in this from other triazoles.

### Chracteristics of composition presented in Example 1:

Liquid of red or bright orange color, without any particular odour, density 1.12 g/cm³, pH 6-8. On addition to water forms stable suspension. Decomposes at temperatures above 200 °C.

Acute oral toxicity LD₅₀ for composition presented in Example 1 amounts to more than 5000 mg/kg in rats. Acute dermal toxicity LD₅₀ of the preparation is more than 4000 mg/kg in rats. Acute inhalation toxicity LC₅₀ in rats is above 9283 mg/m³. According to Sanitary pesticide classification by degree of hazard the preparation belongs to 4^{th} class of hazard by acute oral and dermal toxicity, and to 3^{rd} class of hazard by inhalation toxicity.

Exhibits no skin-resorbtive action. The composition possess weak irritating action on eye mucous coats. According to Sanitary pesticide classification by degree of hazard the composition belongs to 4^{th} class of hazard by skin-irritating action, and to 3^{rd} class of hazard by action on eye mucous coats. It exhibits no sensibilizing properties and belongs to 4^{th} class of hazard according to Sanitary pesticide classification by degree of hazard.

**Examples 2-8** have been performed similar to Example 1, in accordance with data listed in Table 2 for each specific example, correspondingly.
Table 1 illustrates general characteristics of the present composition. Data listed in this table are based on properties of compositions according to Examples 1-8.

**Table 1**

| **General characteristics of composition** | |
|---|---|
| The present pesticidal composition | Composition in accordance with Examples 1-8, correspondingly. |
| Preparative form | Suspension concentrate (s.c.). |
| Field of application | For application on planted seeds of winter and spring wheat, winter and spring barley, and other crops against complex of diseases, by seed dressing. |
| Rate of application | 1.0 l/ton. |
| Method of application | Seeds treatment by pre-sowing dressing. |
| Compatibility | The preparation may be used in tank mixtures with other plant protection means (insecticides, plant growth regulators). |
| Phytotoxicity Phytotoxicity | Exhibits no phytotoxicity under conditions of application in recommended rates. |
| | |

**Table 2**

| **Quantitative characteristics of the pesticidal composition claimed** | | | | | | | | |
|---|---|---|---|---|---|---|---|---|
| | **Components quantity, g/l** | | | | | | | |
| **Components** | **Examples:** | | | | | | | |
| | *1* | *2* | *3* | *4* | *5* | *6* | *7* | *8* |
| Carboxin | 405.5 | 460 | 525 | 340 | 274 | 418 | 530 | 160 |
| Triadimenol | 98 | 53 | 71 | 125 | 280 | 315 | 380 | 221 |
| Tebuconazol | 3 | 5 | 11 | 20 | 37 | 26 | 42 | 50 |

**Table 3**

| **Effectiveness of seed dresser application on winter wheat** | | | |
|---|---|---|---|
| | **Biological effectiveness, %** | | |
| **Variant** | **Fusarium spp.** | **Tilletia caries** | **Ustilago tritici** |
| The present composition, 0.7 l/ton | 60.8 | 100.0 | 100.0 |
| The present composition, 1.0 1/ton | 76.5 | 100.0 | 100.0 |
| Vitavax 200FF, 34% water suspension concentrate (w.s.c.) (prototype), 3.0 1/ton | 73.2 | 100.0 | 100.0 |

Table 3 lists data on biological effectiveness of pesticidal composition obtained in field tests against major winter wheat diseases transmitted with seeds and via soil: root rots provoked by phytopathogenic fungi of *Fusarium* species, covered smut *(Tilletia caries)* and loose smut (*Ustilago tritici*) of wheat.

**Table 4**

| **Effectiveness of seed dresser application on spring wheat** | | |
|---|---|---|
| **Variant** | **Biological effectiveness, %** | |
| | **Fusarium spp.** | **Tilletia caries** |
| The present composition, 0.7 l/ton | 72.9 | 100.0 |
| The present composition, 1.0 l/ton | 86.0 | 100.0 |
| Vitavax 200 FF, 34% w.s.c., (prototype), 3.0 l/ton | 78.2 | 100.0 |

Table 4 lists data on biological effectiveness of pesticidal composition obtained in field tests against major diseases of spring wheat transmitted with seeds and via soil: root rots provoked by phytopathogenic fungi of *Fusarium* species and covered smut *(Tilletia caries)* of wheat.

**Table 5**

| **Effectiveness of seed dresser application on spring barley** | | | | |
|---|---|---|---|---|
| | **Biological effectiveness, %** | | | |
| **Variant** | **Fusarium spp. + Bipolaris sorokiniana (23**^{**rd**} **stage)** | **Fusarium spp. + Bipolaris sorokiniana (73**^{**rd**} **stage)** | **Bipolaris sorokiniana + Drechslera teres** | **Ustilago nuda** |
| The present composition, 0.7 1/ton | 58.5 | 28.9 | 62.0 | 75.3 |
| The present composition, 1.0 1/ton | 75.7 | 40.0 | 65.1 | 96.6 |
| Vitavax 200 FF, 34% w.s.c., (prototype), 3.0 1/ton | 74.0 | 38.1 | 64.5 | 95.0 |

Table 5 lists data on biological effectiveness of pesticidal composition obtained in field tests against major diseases of spring barley transmitted with seeds and via soil: root rots provoked by phytopathogenic fungi of *Fusarium* species, *Bipolaris sorokiniana* and *Drechslera teres,* and loose smut (*Ustilago nuda*) of barley.

## Claims

1. Pesticidal composition comprising as active components effective compound of oxathiin series carboxin, and water for providing suspension, **characterized in that** it comprises as other active components effective compounds of triazole series triadimenol and tebuconazol, the mass ratio of effective compounds carboxin, triadimenol and tebuconazol amounting to (1...6):(0.7...4):(0.01...0.6), correspondingly, said composition further comprising auxiliary substances in following quantitative ratio of the components, g/l:
| | |
|---|---|
| Carboxin | 100...600 |
| Triadimenol | 70...400 |
| Tebuconazol | 1...60 |
| Auxiliary substances | 50...300 |
| Water | to 1 1. |

2. Pesticidal composition according to claim 1, **characterized in that** it comprises as auxiliary substances dispersing agent, antiseptic, antifoaming agent, antifreeze, stabilizer, and dye in following quantitative ratio of all components, g/l:
| | |
|---|---|
| Carboxin | 100...600 |
| Triadimenol | 70...400 |
| Tebuconazol | 1...60 |
| Dispersing agent | 50...200 |
| Antiseptic | to 15 |
| Antifoaming agent | 0.01...5 |
| Antifreeze | 5...50 |
| Stabilizer | 0,5...5 |
| Dye | 3...30 |
| Water | to 1 1. |

3. Pesticidal composition according to claims 1, 2, **characterized in that** it comprises as dispersing agent sodium 2-acrylamido-2-methylpropane sulphonic acid or 2-acrylamido-2-methylpropane sulphonic acid, or acrylic acid / 2-acrylamido-2-methylpropane sulphonic acid copolymer, or maleic anhydride / acrylic acid copolymer.

4. Pesticidal composition according to claims 1, 2, **characterized in that** it comprises as antiseptic mecetronium or chloride benzalkonium, or dodecylbispropilenetriamine, or dodecyldimethyl ammonium chloride, or 1,6-dihydroxy-2,5-dioxohexane, or thiophene, or vasin.

5. Pesticidal composition according to claims 1, 2, **characterized in that** it comprises as antifoaming agent organosilicon oligomer, for example, disiloxane, or mixture of polymethylsiloxane and polyvinyl alcohol, or mixture of acetylated monoglycerides and potassium succinylated monoglycerides, or fatty acids ester of polyglycerol

6. Pesticidal composition according to claims 1, 2, **characterized in that** it comprises as antifreeze ethyleneglycol or polyethyleneglycol, or oxyethylated monoalkylphenol.

7. Pesticidal composition according to claim 1, **characterized in that** it comprises as stabilizer polyvinyl alcohol or glycidyl ether-blocked acetylenediol ethoxylate.

8. Pesticidal composition according to claim 1, **characterized in that** it comprises as dye a rhodamine group dye.
